# EUROPEAN PATENT SPECIFICATION

(11) **EP 2 418 575 B1**
(45) Date of publication and mention of the grant of the patent: **23.05.2018**
(21) Application number: 10172441.7
(22) Date of filing: 10.08.2010
(51) Int. Cl.: G06F 9/44

(54) **Metadata-driven process control platform**
Metadatengesteuerte Verfahrenssteuerungsplattform
Plateforme de contrôle de procédé commandée par métadonnées

(43) Date of publication of application: 15.02.2012
(73) Proprietor: I&DT Holding B.V., 1500 GE Zaandam (NL)
(72) Inventor: Vis, Dennis, 1507 RC Zaandam (NL)
(74) Representative: De Vries & Metman

(56) References cited:
- EP-A1- 1 818 813
- EP-A2- 1 953 690
- WO-A1-2008/118594
- US-A1- 2002 138 449
- US-A1- 2006 031 817
- US-A1- 2009 216 786

## Description

### Field of the invention

The invention relates to a metadata driven process control platform, and, in particular, though not exclusively, to a computer-based metadata driven process control system, a computer-implemented method for controlling the execution of a process and a computer program product using such method.

### Background of the invention

Currently large, process-driven organizations such as a business organization or an industrial manufacturing organization use specific software platforms in order to control and execute processes specific to the organization. The software platform may be specifically designed for a specific organization or, alternatively, the platform may be built using generic modules provided by vendors, which during an implementation phase are modified for a specific organization. These approaches are rather inflexible and do not allow flexible adaptation to changes in the organization.

Another approach is the use of so-called metadata driven applications wherein a generically designed software application may be customized using metadata. The metadata allows specific pre-configuration of an application so that data may be processed in accordance with the requirements within a specific organization. An example of such metadata driven software application is described in US2005/0160060.

One problem related to the prior art is that the proposed schemes only provide limited flexibility in customization in the sense that an application is preconfigured such that once an application is executed the configuration is fixed .

Another problem with the prior art relates to the fact that over a long period of time customization may change many times. Moreover, at some point in time it may become necessary to update at least part of the source code of a metadata configurable application. It is desired that a process control system for a process-driven organization is able to handle such modifications in the customization of processes executed by that system.

Hence, there is a need in the prior art for a metadata driven system and method, which provide improved customization of processes executed by such system and which are robust over time and eliminate or at least greatly reduce problems mentioned above.

### Summary of the invention

It is an object of the invention to reduce or eliminate at least one of the drawbacks known in the prior art. In a first aspect the invention may relate to computer-based metadata driven process control system for use by at least one process-controlled organization, wherein said system may comprise: a plurality of metadata-configurable elementary functions hosted on server system, each of said elementary functions comprising at least a data input, a data output and a metadata input; at least one database for storing data and metadata associated with said organization, said metadata comprising process metadata for identifying the elementary functions used in a process associated with said organization and for determining one or more sequences in which said elementary functions can be executed in said process and configuration metadata for configuring the identified elementary functions in said process; a process control module hosted on said server system and configured to communicate with at least a first terminal and said database and to execute a process on the basis of a process execution request received from said terminal; and wherein said process control module may be further configured to retrieve process metadata associated with said requested process for identifying elementary functions associated with said process and at least one execution sequence of said elementary functions; to retrieve first configuration metadata for configuring a first elementary function associated with said process; to configure said first elementary function on the basis of said first configuration metadata; to generate first output data by executing said first configured elementary function on the basis of input data; to determine a second elementary function in the process on the basis of the process metadata; to retrieve second configuration metadata for configuring the second elementary function on the basis of at least part of said output data and to execute said second elementary function configured on the basis of said second configuration metadata. Hence, during the execution of the process by the process execution module the output of one or more previous elementary functions may determine the configuration of the next elementary function. This way, part of the process intelligence is transferred to the metadata level so that changes in the process may be easily modified by modifying the process- and configuration metadata associated with a process without the requirement of changes in the source code. Such changes may be simply introduced by an authorized user. Further, the metadata driven process control platform using a set of elementary functions is organization neutral thereby enabling the platform to be used at the same time by different organizations. Adaptation of a process to the requirements of an organization can be achieved by adapting the metadata.

In one embodiment, at least part of said data and metadata may be associated with time-stamp information, said time-stamp indicating the point in time the data or metadata was created.

In another embodiment said data and metadata may be stored as initial time-stamped data and metadata and modifications to the initial data and metadata, wherein each modification comprises a time-stamp at which the modification in the initial data and/or metadata occurred.

In yet another embodiment said process control module may be configured to retrieve an initial data and metadata associated with a process identified in a process request and to retrieve the time-stamped modifications associated with said initial set of data and metadata up to the time identified in the process request.

In a further embodiment said process control module may be configured to combine the retrieved initial data and metadata and the retrieved modifications to said initial data and metadata into data and metadata associated with the time defined in the request.

In one variant said process control module may be configured to select configuration metadata associated with an elementary function on the basis of said time-stamp information.

Using time-stamp information the system is able to efficiently store and process historical data and metadata thereby providing improved archiving functionality. Furthermore, on basis of the time-stamped metadata the platform is capable to reconstruct the process, which was used at a particular point in time and execute the process on the basis of the metadata and data then used. This way the platform may efficiently cope with backwards compatibility issues.

In another variant said system may further comprise a process editor module for accessing and modifying said metadata.

In yet another variant said process editor module may be configured to time-stamp modified metadata and to store said modified time-stamped metadata in said database.

In a further variant said process control module may be connected via said interface to one or more first terminals associated with a first process-controlled organization and to one or more second terminal associated with a second process-controlled organization, wherein the data and metadata associated with said first and second process-controlled organization are stored in a first and second database respectively.

In one embodiment said at least one process-controlled organization may be an administrative organization or an industrial automated product manufacturing organization.

In another embodiment said terminal may comprise a graphical user interface and wherein at least one of said elementary functions is a metadata configurable elementary display function for displaying data associated with said process on said terminal.

In yet another embodiment said terminal may comprise a data controller interface connected to a process controller in an automated manufacturing plant and wherein at least one of said elementary functions is a metadata driven manufacturing process.

In a further aspect the invention may relate to a computer-implemented method for use in a system according as described above wherein the said method may comprise: retrieving process metadata associated with a requested process for identifying elementary functions associated with a process and at least one execution sequence of said elementary functions; retrieving first configuration metadata for configuring a first elementary function associated with said process; configuring said first elementary function on the basis of said first configuration metadata; generating first output data by executing said first configured elementary function on the basis of input data; determining a second elementary function in the process on the basis of the process metadata and retrieving second configuration metadata for configuring the second elementary function on the basis of at least part of said output data and executing said second elementary function configured on the basis of said second configuration metadata. The invention may also relate to a computer program product, the computer program product comprising software code portions configured for, when run on a computer, executing a method as described above.

The invention will be further illustrated with reference to the attached drawings, which schematically will show embodiments according to the invention. It will be understood that the invention is not in any way restricted to these specific embodiments.

### Brief description of the drawings

**Fig. 1** depicts a schematic of a metadata driven process control system according to one embodiment of the invention.
**Fig. 2** depicts at least part of a metadata driven process control system according to another embodiment of the invention.
**Fig. 3** depicts a flow diagram associated with a metadata driven process according to one embodiment of the invention.
**Fig. 4** depicts at least part of a metadata driven process control system according to another embodiment.
**Fig. 5** depicts a flow diagram associated with a metadata driven process according to another embodiment of the invention.

### Detailed description

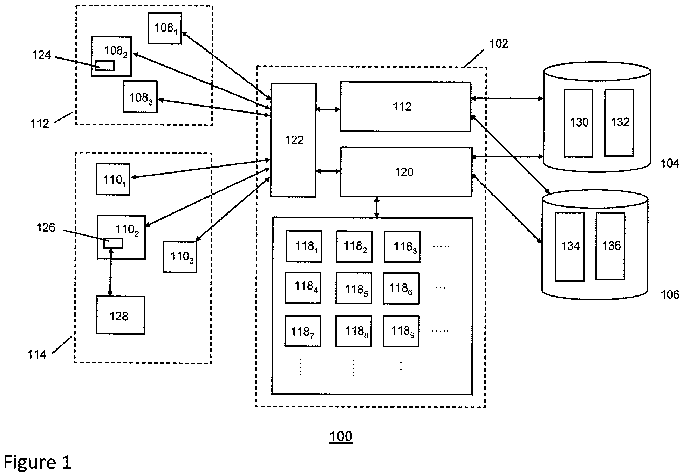

**Fig. 1** depicts a schematic of a computer system **100** configured for executing metadata driven processes according to one embodiment of the invention. In particular, **Fig. 1** discloses an example of a computer system comprising a server system **102** connected to one or more databases **104,106.** Terminals **108₁-108₃,110₁-110₃** associated with different organizations **112,114** may be connected to the server system via one or more communications networks such as the Internet, a local network (LAN) and/or a wide area network (WAN).

The server system **102** may be configured to host a process management platform comprising a set of elementary functions **118₁-118₉** and a process execution module **120** configured to execute the elementary functions on the basis of data and metadata.

The process management platform may be configured to centrally control processes of several organizations. Such processes may e.g. include administrative and/or logistic processes associated with business organizations, e.g. customer relationship management (CRM) or enterprise resource planning (ERP), and/or manufacturing processes associated with industrial manufacturer organization, e.g. the automated production process in a plant, e.g. a chemical plant or a power plant, or in a factory.

Entities associated with an organization requiring access to (part of the) the process management platform, e.g. users within a business organization and/or process control modules in a industrial manufacturing organization, may communicate with the process management platform using a terminal. Communication between a terminal and the process execution module is enabled through an interface module **122** associated with the server system.

A terminal (112) may be implemented as a computer comprising one or more interfaces, e.g. a user interface **124** allowing to receive and visualize data received from the platform and to send requests to the platform. Alternatively and/or in addition, a terminal may comprise a data interface **126** for one or more manufacturing controllers **128** allowing the process management platform to send and receive process control data for managing a manufacturing process.

The terminals and the server system typically comprise an operating system (OS) comprising a kernel which manages resources, e.g. one or more Central Processing Units (CPUs), a memory for storing program instructions and data and Input/Output (I/O) devices. In one embodiment, a terminal may execute client software, which uses HTTP type web sessions and e.g. the secure socket layer (SSL) protocol and/or Security Assertion Mark-up Language (SAML) for providing secure data exchange with the server system.

A process controlled by the platform may be defined as sequential execution of a number of elementary functions. For example, in an administrative process the process may be defined as the sequential execution of a number of elementary administrative functions including e.g. presenting forms to a user, receiving user input, calculating output data on the basis of the user input, storing the output data in a database, etc.

An elementary function may e.g. relate to user input retrieval through a form. The function may request data from the end user by presenting a form to a user, which is dynamically generated based on the current process data, process metadata and configuration metadata. Another elementary function may relate to generating and sending a communication message, e.g. an e-mail based on the current process data, process metadata and configuration metadata. Yet another example of an elementary function may relate to executing an external service, e.g. calling XML web service. Such function may allow the process control module to call an external XML web service using e.g. the Simple Object Access Protocol (SOAP) or XML/RPC. Parameters and input data for the external service are determined at runtime based on the current process data, process metadata and configuration metadata.

Similarly, a manufacturing process may be defined as the execution of a sequence of elementary manufacturing functions including receiving setting parameters for a chemical reactor, configure input and output valves in accordance with the parameters, start reactor process, monitor one or more process parameters during reactor process, etc.

Each elementary function **118₁-118₉** may be generically implemented such that it is organization neutral thereby allowing it to be used for processes of different organizations without any modification to the source code. The elementary functions may be associated with different functional layers of the platform e.g. security, system configuration, user interface, data access, etc. An elementary function may be implemented as a software module or a combined software/hardware module, which may be executed on the basis of metadata **130,134** and data **132,136** stored in one or more databases **104,106.** In particular, metadata may be used to configure the function and the data may be used as input data for the thus configured function.

For example, an elementary function in an administrative process may relate to the creation of an invoice document. Structures of such documents may depend on the standard used by the organization generating the invoice, the standard used by the organization the invoice is sent to, the type of products and/or services the invoice relates to etc. The invoice metadata may configure the elementary invoice data function to produce a specific invoice document used by a specific organization. This way, the invoice metadata sets may configure the elementary invoice function to produce different invoice documents. Similarly, an elementary function in an industrial manufacturing process may relate to a generic chemical reaction chamber control function for controlling the supply of a number of materials to the reaction chamber.

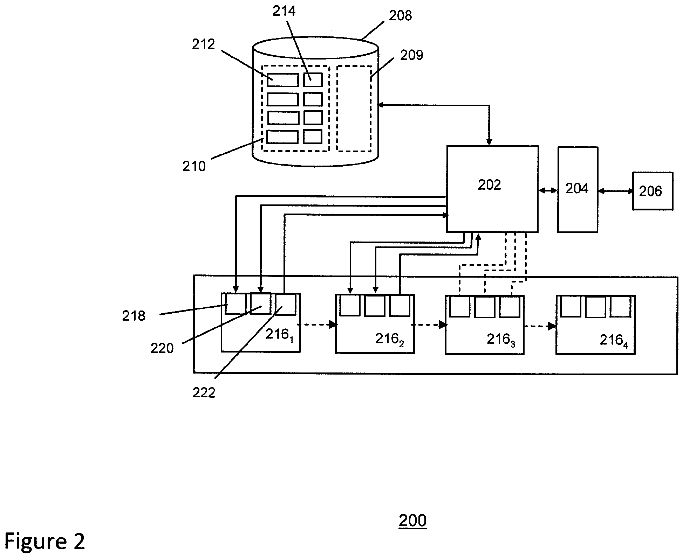

**Fig. 2** schematically depicts the functioning of the metadata driven process control platform **200** in more detail. The metadata driven process control platform comprises a process execution module **202,** connected via an interface **204** to a terminal **206** and to at least one database **208** in a similar way as described with reference to the system depicted in **Fig. 1****.**

The processes associated with an organization may be defined in terms of data (209) and metadata **210** stored in the database wherein the metadata comprises process metadata **212** and configuration metadata **214.** The process metadata may specify how the process is executed and may include e.g. identification information identifying the elementary functions used in each process and process scheduling information for defining the sequence in which the elementary functions are executed and the (logical) conditions under which a function is executed.

Configuration metadata may define a specific configuration of an elementary function. In this particular example the process metadata defines (part of) a particular process comprising four different elementary functions **216₁**-**216₄.** Each function is implemented as a module comprising at least one data input **218,** a data output **220** and an metadata input **222.**

The metadata may define conditional execution of an elementary function. In one embodiment, depending on the input data for an elementary function, different configuration metadata defining different function configurations may be selected for an elementary function. This way, the process metadata may determine how an elementary function is configured during the execution of a process.

For example, if an input variable **218** of an elementary function is smaller than a particular threshold value, first configuration metadata may be used to configure the elementary function. If the input variable is larger than the threshold value second configuration metadata may used to configure the elementary function. This way the configuration of an elementary document presentation function displaying a document to a user may be changed on the basis of document data size or any other relevant parameter or combinations thereof.

In another embodiment, the metadata may make the selection of a subsequent elementary function in a process dependent on the output of an elementary function. For example, in one embodiment, if an output variable of an elementary function is smaller than a particular threshold value a first elementary function may be selected and configured by first configuration metadata by the process execution module and if the input variable is larger than a particular threshold value a second elementary function is selected and configured by second configuration metadata.

This way, the platform provides process control wherein elementary functions are dynamically configured and/or selected during the execution of a process, whereby part of the process logic is mitigated to the metadata level thereby providing improved flexibility of process definition and process modifications.

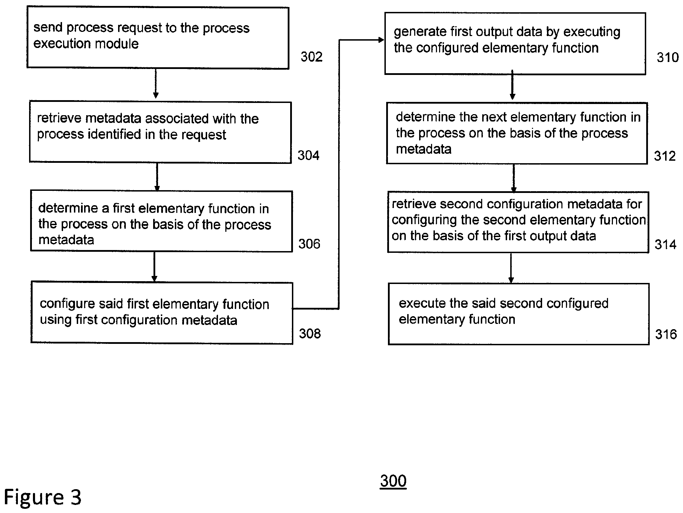

**Fig. 3** depicts at least part of a process flow **300** executed by the platform as described with reference to **Fig. 2****.** A process request may be sent to the process execution module which may start the process (step **302**). The request may comprise a process identifier, one or more input parameters and reference to user data stored on a database, which is used as input data for the process. Upon reception of the request, the process execution module may access the database in order to retrieve the process metadata associated with the process identified in the request (step **304**). On the basis of the process metadata the process execution module identifies the first elementary function of the process and its associated first configuration metadata (step **306**).

The process execution module subsequently configures the first elementary function using the configuration metadata (step 308), retrieves the user data from the database and executes the thus configured elementary function using the user data as first input data in order to produce first output data (step 310). When the process execution module receives the first output data, it determines the next (second) elementary function in the process on the basis of the process metadata (step 312). After having determined the second elementary function, it retrieves second configuration metadata for configuring the second elementary function (step 314) and executes the configured second elementary function on the basis of first output data (step 316). The process execution module repeats the same steps for the third and fourth elementary function. Hence, during the execution of the process by the process execution module the output of one or more previous elementary functions may determine the configuration of the next elementary function. This way, part of the process intelligence is transferred to the metadata level so that changes in the process may be easily modified by modifying the process- and configuration metadata associated with a process without the requirement of changes in the source code. Such changes may be simply introduced by an authorized user. Further, the metadata driven process control platform using a set of elementary functions is organization neutral thereby enabling the platform to be used at the same time by different organizations. Adaptation of a process to the requirements of an organization can be achieved by adapting the metadata.

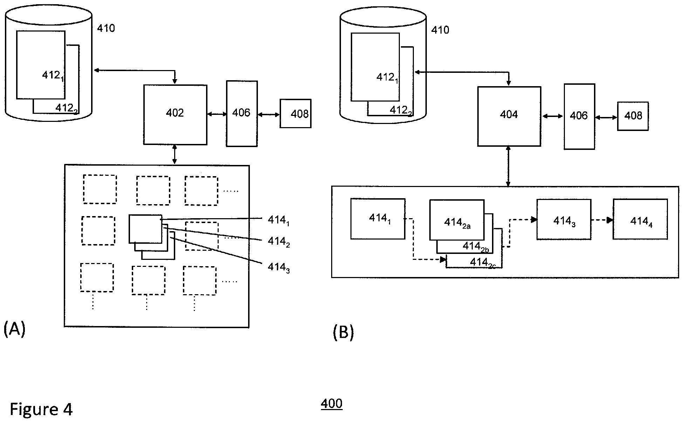

**Fig. 4** depicts part of the metadata driven process control platform according to another embodiment. In particular, **Fig. 4** (A) depicts at least part of a process control system comprising an editor module **402** connected via an interface **406** to a terminal **408.** If a process within an organization requires a a modification, an authorized person such as process supervisor, may access the metadata stored in the metadata database through the terminal and change the metadata, i.e. the process- and configuration metadata, via the process editor module **402.** This way it is possible to adapt the processes executed by the process management platform without re-compilation of code.

In one embodiment, modifications in the process- and configuration metadata introduced through the process editor module may be time-stamped. Similarly, data associated with a process may be time-stamped. Different time-stamped sets of metadata and/or data associated with different versions of a process **412₁, 412₂** may be stored in the database. This way, process modifications may be efficiently traced, achieved by the platform and re-executed.

To store and retrieve the time-stamped data and metadata, in one embodiment, a mechanism is used in which the (original) initially used data and metadata and all modifications to the data and metadata with the time-stamp at which they occurred are stored separately. The current version of the data can be stored as a cache for performance purposes.

When retrieving data and metadata for a specific moment in time, the initial data and metadata and their modifications up to the requested time-stamp are retrieved. The process control module combines the initial data and the modifications to a set of data and metadata as it was at the requested moment in time. In the default case, the system will retrieve data and metadata for the date and time at which the request is made. This way the system is able to efficiently store and process historical data and metadata thereby providing improved archiving functionality.

Further, although the elementary functions are generically defined and may be configured and customized though the configuration metadata sometimes it may be required to modify an elementary function. A platform supervisor may introduce a new version of an elementary function **414₁-414₃** in the system using the process editor module. In order to cope with such changes, in one embodiment, an elementary function may be time-stamped. The process metadata may define which version - the most recent or an earlier version - of an elementary function is to be used in a particular process.

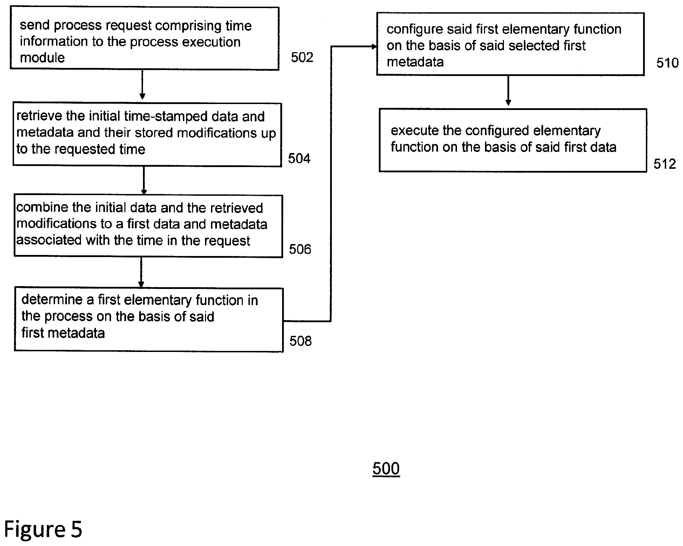

**Fig. 4** (B) schematically depicts part of the platform wherein modifications in the process are introduced by an authorized user of an organization. The process execution module **404** may execute a process defined by metadata stored in the database in a similar way as described with reference to **Fig. 2****.** In this case however, different metadata versions associated with a process are stored in the database and a user is interested in executing an earlier (time-stamped) version **412₂** of the process. As the process includes an elementary function of which different versions are stored in the system, the metadata may determine to execute the process on the basis of an earlier version. This process is depicted more in detail in the process flow **500** of **Fig. 5****.**

In this example the user may request execution of the same process as described with reference to **Fig. 2****.** A user is interested in the execution of the process as defined at a certain point in the past. The process request sent to the process execution module (step **502**) therefore comprises time information associated with the process.

Upon reception of the request, the process execution module may access the database in order to access the process metadata associated with the process identified in the request in a similar way as described with reference to **Fig. 2****.** As the request comprises time information, the process execution module retrieves the initial (earliest) time-stamped data and metadata and their time-stamped modifications which are stored thereafter up to the time identified in the request (step 504). The process control module may thereafter combine the initial data and the retrieved modifications to a set of data and metadata associated with the time defined in the request (step 506). Thereafter, the process may be executed in a similar way as described with reference to **Fig. 3****,** i.e. identify the first elementary function of the process and its associated first configuration metadata (step 508); configuration of the first elementary function using the configuration metadata (step 510), retrieval of user data from the database and execution of the thus configured elementary function (step 512). When the process execution module receives the first output data, it determines the next (second) elementary function in the process on the basis of the process metadata In this case, the second elementary function has three (time-stamped) versions. On the basis of the time information the process execution module then determines the correct version of the second elementary function, retrieves second configuration metadata associated with this version and executes the configured second elementary function on the basis of first output data.

Obviously, an earlier process version may comprise modifications in the process- and/or configuration metadata so that the result produced by the execution of the process may differ from the result produced by the process illustrated in **Fig. 2****.** As described with reference to **Fig. 3-5****,** the platform stores a timeline of the modifications associated metadata and elementary functions such that - if required - the platform may execute an achieved process. On the basis of the time-stamped metadata the platform is capable to reconstruct the process, which was used at a particular point in time and execute the process on the basis of the metadata and data then used. This way the platform may efficiently cope with backwards compatibility issues.

One embodiment of the invention may be implemented as a program product for use with a computer system. The program(s) of the program product define functions of the embodiments (including the methods described herein) and can be contained on a variety of computer-readable storage media. Illustrative computer-readable storage media include, but are not limited to: (i) non-writable storage media (e.g., read-only memory devices within a computer such as CD-ROM disks readable by a CD-ROM drive, flash memory, ROM chips or any type of solid-state non-volatile semiconductor memory) on which information is permanently stored; and (ii) writable storage media (e.g., floppy disks within a diskette drive or hard-disk drive or any type of solid-state random-access semiconductor memory) on which alterable information is stored.

## Claims

1. Computer-based metadata-driven process control system (100, 200) for executing an administrative, logistic or manufacturing process used by at least one process-controlled organization, said system comprising:
a plurality of metadata-configurable elementary functions (118₁-118₉; 216₁-216₄) hosted on a server system (102), each of said elementary functions comprising at least a data input (218), a data output (220) and a metadata input (222);
at least one database (104, 106, 208) for storing data (132, 136, 209) and metadata (130, 134, 210) associated with said organization, said metadata comprising process metadata (212) for identifying the elementary functions used in said administrative, logistic or manufacturing process and for determining one or more sequences in which said elementary functions can be executed in said process and configuration metadata (214) for configuring the identified elementary functions in said process;
a process control module (102, 202) hosted on said server system and configured to communicate with at least a first terminal (112, 206) and said at least one database and to execute said administrative, logistic or manufacturing process by dynamically configuring and executing said elementary functions on the basis of said data and metadata when a process execution request is received from said terminal;
wherein said process control module is further configured to retrieve (304) process metadata associated with said requested process for identifying (306) elementary functions associated with said process and at least one execution sequence of said elementary functions; to retrieve first configuration metadata for configuring (308) a first elementary function associated with said process; to configure (308) said first elementary function on the basis of said first configuration metadata; to generate (310) first output data by executing said first configured elementary function on the basis of input data; to determine (312) a second elementary function in the process on the basis of the process metadata;
**characterized in that**
the process control module is further configured to retrieve (314) second configuration metadata for configuring the second elementary function on the basis of at least part of said output data; and, to execute (316) said second elementary function configured on the basis of said second configuration metadata.

2. System according to claim 1, wherein at least part of said data and metadata is associated with time-stamp information, said time-stamp indicating the point in time the data or metadata was created.

3. System according to claim 2, wherein said data and metadata are stored as initial time-stamped data and metadata and modifications to the initial data and metadata, wherein each modification comprises a time-stamp at which the modification in the initial data and/or metadata occurred.

4. System according to claims 2 or 3, wherein process control module is configured to retrieve an initial data and metadata associated with a process identified in a process request and to retrieve the time-stamped modifications associated with said initial set of data and metadata up to the time identified in the process request.

5. System according to claim 4, wherein said process control-module is configured to combine the retrieved initial data and metadata and the retrieved modifications of said initial data and metadata into data and metadata associated with the time defined in the request.

6. System according to any of claims 2-5, wherein said process control module is configured to select configuration metadata associated with an elementary function on the basis of said time-stamp information.

7. System according to any of claims 1-6, wherein said system further comprises a process accessing and modifying said metadata.

8. System according to claim 7, wherein said process editor module is configured to time-stamp modified metadata and to store said modified time-stamped metadata in said database.

9. System according to any of claims 1-8, wherein said process control module is connected via said interface to one or more first terminals associated with a first process controlled organization and to one or more second terminal associated with a second process-controlled organization, wherein the data and metadata associated with said first and second process-controlled organization are stored in a first and second database respectively.

10. System according to any of claims 7-9, wherein said at least one process-controlled organization is an administrative organization or an industrial-automated product manufacturing organization.

11. System according to any of claims 1-10, wherein said terminal comprises a graphical user interface and wherein at least one of said elementary functions is a metadata configurable elementary display function for displaying data associated with said process on said terminal.

12. System according to any of claims 1-10, wherein said terminal comprises a data controller interface connected to a process controller in an automated manufacturing plant
and wherein at least one of said elementary functions is a metadata driven manufacturing process.

13. Computer-implemented method for use in a system according to any of claims 1-12, said method comprising:
retrieving (304) process metadata associated with a requested process (302) for identifying (306) elementary functions (118₁-118₉; 216₁-216₄) associated with a process and at least one execution sequence of said elementary functions;
retrieving first configuration metadata (214) for configuring a first elementary function associated with said process;
configuring (308) said first elementary function on the basis of said first configuration metadata;
generating (310) first output data by executing said first configured elementary function on the basis of input data;
determining (312) a second elementary function in the process on the basis of the process metadata;
**characterized by** retrieving (314) second configuration metadata for configuring the second elementary function on the basis of at least part of said output data; and, executing (316) said second elementary function configured on the basis of said second configuration metadata.

14. A computer program product, the computer program product comprising software code portions configured for, when run on a computer, executing a method according claim 13.

## Patentansprüche

1. Computergestütztes metadatengesteuertes Prozesssteuersystem (100, 200) zum Ausführen eines Verwaltungs-, Logistik- oder Herstellungsprozesses, der von mindestens einer prozessgesteuerten Organisation verwendet wird, wobei das System aufweist:
mehrere metadatenkonfigurierbare elementare Funktionen (118₁ - 118₉; 216₁ - 216₄), die auf einem Serversystem (102) gehostet werden, wobei jede der elementaren Funktionen mindestens eine Dateneingabe (218), eine Datenausgabe (220) und eine Metadateneingabe (222) aufweist;
mindestens eine Datenbank (104, 106, 208) zum Speichern von Daten (132, 136, 209) und Metadaten (130, 134, 210), die der Organisation zugeordnet sind, wobei die Metadaten Prozessmetadaten (212) zum Identifizieren der in dem Verwaltungs-, Logistik- oder Herstellungsprozess verwendeten elementaren Funktionen und zum Bestimmen einer oder mehrerer Sequenzen enthalten, in denen die elementaren Funktionen im Prozess ausgeführt werden können, und Konfigurationsmetadaten (214) zum Konfigurieren der identifizierten elementaren Funktionen in dem Prozess;
ein Prozesssteuermodul (102, 202), das auf dem Serversystem gehostet wird und dafür konfiguriert ist, mit mindestens einem ersten Endgerät (112, 206) und der mindestens einen Datenbank zu kommunizieren und den Verwaltungs-, Logistik- oder Herstellungsprozess durch dynamisches Konfigurieren und Ausführen der elementaren Funktionen auf der Basis der Daten und Metadaten auszuführen, wenn eine Prozessausführungsanforderung vom Endgerät empfangen wird,
wobei das Prozesssteuermodul ferner dafür konfiguriert ist, Prozessmetadaten abzurufen (304), die dem angeforderten Prozess zugeordnet sind, um dem Prozess zugeordnete elementare Funktionen und mindestens eine Ausführungssequenz der elementaren Funktionen zu identifizieren (306); erste Konfigurationsmetadaten zum Konfigurieren (308) einer dem Prozess zugeordneten ersten elementaren Funktion abzurufen; die erste elementare Funktion auf der Basis der ersten Konfigurationsmetadaten zu konfigurieren (308); erste Ausgabedaten durch Ausführen der ersten konfigurierten elementaren Funktion auf der Basis von Eingabedaten zu erzeugen (310); und eine zweite elementare Funktion im Prozess auf der Basis der Prozessmetadaten zu bestimmen (312);
**dadurch gekennzeichnet, dass**
das Prozesssteuermodul ferner dafür konfiguriert ist, zweite Konfigurationsmetadaten zum Konfigurieren der zweiten elementaren Funktion auf der Basis mindestens eines Teils der Ausgabedaten abzurufen (314); und die zweite elementare Funktion auszuführen (316), die auf der Basis der zweiten Konfigurationsmetadaten konfiguriert ist.

2. System nach Anspruch 1, wobei mindestens einem Teil der Daten und der Metadaten Zeitstempelinformation zugeordnet ist, wobei der Zeitstempel den Zeitpunkt angibt, zu dem die Daten oder Metadaten erzeugt wurden.

3. System nach Anspruch 2, wobei die Daten und die Metadaten als anfängliche zeitgestempelte Daten und Metadaten und Modifikationen der anfänglichen Daten und Metadaten gespeichert sind, wobei jede Modifikation einen Zeitstempel aufweist, bei dem die Modifikation der ursprünglichen Daten und/oder Metadaten stattgefunden hat.

4. System nach Anspruch 2 oder 3, wobei das Prozesssteuermodul dafür konfiguriert ist, anfängliche Daten und Metadaten, die einem in einer Prozessanforderung identifizierten Prozess zugeordnet sind, abzurufen und die zeitgestempelten Modifikationen, die dem Anfangssatz von Daten und Metadaten zugeordnet sind, bis zu dem Zeitpunkt abzurufen, der in der Prozessanforderung identifiziert ist.

5. System nach Anspruch 4, wobei das Prozesssteuermodul dafür konfiguriert ist, die abgerufenen anfängliche Daten und Metadaten und die abgerufenen Modifikationen der anfängliche Daten und Metadaten in Daten und Metadaten zu kombinieren, denen die in der Anforderung definierte Zeit zugeordnet ist.

6. System nach einem der Ansprüche 2 bis 5, wobei das Prozesssteuermodul dafür konfiguriert ist, Konfigurationsmetadaten, die einer elementaren Funktion zugeordnet sind, auf der Basis der Zeitstempelinformation auszuwählen.

7. System nach einem der Ansprüche 1-6, wobei das System ferner einen Prozess zum Zugreifen auf und Modifizieren der Metadaten aufweist.

8. System nach Anspruch 7, wobei das Prozessbearbeitungsmodul dafür konfiguriert ist, modifizierte Metadaten mit einem Zeitstempel zu versehen und die modifizierten zeitgestempelten Metadaten in der Datenbank zu speichern.

9. System nach einem der Ansprüche 1 bis 8, wobei das Prozesssteuermodul über die Schnittstelle mit einem oder mehreren ersten Endgeräten verbunden ist, die einer ersten prozessgesteuerten Organisation zugeordnet sind, und mit einem oder mehreren zweiten Endgeräten, die einer zweiten prozessgesteuerten Organisation zugeordnet sind, wobei die der ersten und der zweiten prozessgesteuerten Organisation zugeordneten Daten und Metadaten in einer ersten und in einer zweiten Datenbank gespeichert sind.

10. System nach einem der Ansprüche 7 bis 9, wobei die mindestens eine prozessgesteuerte Organisation eine Verwaltungsorganisation oder eine Organisation zur industriellen automatisierten Produktfertigung ist.

11. System nach einem der Ansprüche 1 bis 10, wobei das Endgerät eine grafische Benutzerschnittstelle aufweist und wobei mindestens eine der elementaren Funktionen eine metadatenkonfigurierbare elementare Anzeigefunktion zum Anzeigen von dem Prozess zugeordneten Daten auf dem Endgerät ist.

12. System nach einem der Ansprüche 1 bis 10, wobei das Endgerät eine Datensteuereinheitschnittstelle aufweist, die mit einer Prozesssteuereinheit in einer automatisierten Fertigungsanlage verbunden ist, und
wobei mindestens eine der elementaren Funktionen ein metadatengesteuerter Fertigungsprozess ist.

13. Computerimplementiertes Verfahren zur Verwendung in einem System nach einem der Ansprüche 1 bis 12, wobei das Verfahren die Schritte aufweist:
Abrufen (304) von Prozessmetadaten, die einem angeforderten Prozess (302) zugeordnet sind, zum Identifizieren (306) elementarer Funktionen (118₁ - 118₉, 216₁ - 216₄), die einem Prozess zugeordnet sind, und mindestens einer Ausführungssequenz der elementaren Funktionen;
Abrufen erster Konfigurationsmetadaten (214) zum Konfigurieren einer dem Prozess zugeordneten ersten elementaren Funktion;
Konfigurieren (308) der ersten elementaren Funktion auf der Basis der ersten Konfigurationsmetadaten;
Erzeugen (310) erster Ausgabedaten durch Ausführen der ersten konfigurierten elementaren Funktion auf der Basis von Eingabedaten;
Bestimmen (312) einer zweiten elementaren Funktion in dem Prozess auf der Basis der Prozessmetadaten;
**gekennzeichnet durch**
Abrufen (314) zweiter Konfigurationsmetadaten zum Konfigurieren der zweiten elementaren Funktion auf der Basis mindestens eines Teils der Ausgabedaten; und
Ausführen (316) der zweiten elementaren Funktion, die auf der Basis der zweiten Konfigurationsmetadaten konfiguriert ist.

14. Computerprogrammprodukt, wobei das Computerprogrammprodukt Softwarecodeabschnitte aufweist, die dafür konfiguriert sind, ein Verfahren nach Anspruch 13 auszuführen, wenn sie auf einem Computer ausgeführt werden.

## Revendications

1. Système de commande de processus piloté par métadonnées informatisé (100, 200) pour exécuter un processus administratif, logistique ou de fabrication utilisé par au moins une organisation commandée par processus, ledit système comprenant :
une pluralité de fonctions élémentaires configurables par métadonnées (118₁-118₉ ; 216₁-216₄) hébergées sur un système de serveur (102), chacune desdites fonctions élémentaires comprenant au moins une entrée de données (218), une sortie de données (220) et une entrée de métadonnées (222) ;
au moins une base de données (104, 106, 208) pour stocker des données (132, 136, 209) et des métadonnées (130, 134, 210) associées à ladite organisation, lesdites métadonnées comprenant des métadonnées de processus (212) pour identifier les fonctions élémentaires utilisées dans ledit processus administratif, logistique ou de fabrication et pour déterminer une ou plusieurs séquences dans lesquelles lesdites fonctions élémentaires peuvent être exécutées dans ledit processus et des métadonnées de configuration (214) pour configurer les fonctions élémentaires identifiées dans ledit processus ;
un module de commande de processus (102, 202) hébergé sur ledit système de serveur et configuré pour communiquer avec au moins un premier terminal (112, 206) et ladite au moins une base de données et pour exécuter ledit processus administratif, logistique ou de fabrication en configurant dynamiquement et en exécutant lesdites fonctions élémentaires sur la base desdites données et métadonnées quand une demande d'exécution de processus est reçue à partir dudit terminal ;
dans lequel ledit module de commande de processus est configuré en outre pour récupérer (304) des métadonnées de processus associées audit processus demandé pour identifier (306) des fonctions élémentaires associées audit processus et au moins une séquence d'exécution desdites fonctions élémentaires ; pour récupérer des premières métadonnées de configuration pour configurer (308) une première fonction élémentaire associée audit processus ; pour configurer (308) ladite première fonction élémentaire sur la base desdites premières métadonnées de configuration ; pour générer (310) des premières données de sortie en exécutant ladite première fonction élémentaire configurée sur la base de données d'entrée ; pour déterminer (312) une deuxième fonction élémentaire dans le processus sur la base des métadonnées de processus ;
**caractérisé en ce que**
le module de commande de processus est configuré en outre pour récupérer (314) des deuxièmes métadonnées de configuration pour configurer la deuxième fonction élémentaire sur la base d'au moins une partie desdites données de sortie ; et pour exécuter (316) ladite deuxième fonction élémentaire configurée sur la base desdites deuxièmes métadonnées de configuration.

2. Système selon la revendication 1, dans lequel au moins une partie desdites données et métadonnées est associée à des informations d'horodatage, ledit horodatage indiquant le point temporel où les données ou métadonnées ont été créées.

3. Système selon la revendication 2, dans lequel lesdites données et métadonnées sont stockées comme des données et métadonnées horodatées initiales et des modifications sur les données et métadonnées initiales, dans lequel chaque modification comprend un horodatage auquel la modification dans les données et/ou métadonnées initiales se produit.

4. Système selon les revendications 2 ou 3, dans lequel le module de commande de processus est configuré pour récupérer une données et une métadonnée initiales associées à un processus identifié dans une demande de processus et pour récupérer les modifications horodatées associées audit ensemble initial de données et métadonnées jusqu'au temps identifié dans la demande de processus.

5. Système selon la revendication 4, dans lequel ledit module de commande de processus est configuré pour combiner les données et métadonnées initiales récupérées et les modifications récupérées des dites données et métadonnées initiales dans des données et métadonnées associées au temps défini dans la demande.

6. Système selon l'une quelconque des revendications 2 à 5, dans lequel ledit module de commande de processus est configuré pour sélectionner des métadonnées de configuration associées à une fonction élémentaire sur la base desdites informations d'horodatage.

7. Système selon l'une quelconque des revendications 1 à 6, ledit système comprend en outre un processus de consultation et de modification desdites métadonnées.

8. Système selon la revendication 7, dans lequel ledit module d'éditeur de processus est configuré pour horodater des métadonnées modifiées et pour stocker lesdites métadonnées horodatées modifiées dans ladite base de données.

9. Système selon l'une quelconque des revendications 1 à 8, dans lequel ledit module de commande de processus est connecté par le biais de ladite interface à un ou plusieurs terminaux associés à une première organisation commandée par processus et à un ou plusieurs deuxièmes terminaux associés à une deuxième organisation commandée par processus, dans lequel les données et métadonnées associées à ladite première et ladite deuxième organisation commandée par processus sont stockées respectivement dans une première et une deuxième base de données.

10. Système selon l'une quelconque des revendications 7 à 9, dans lequel ladite au moins une organisation commandée par processus est une organisation d'administration ou une organisation de fabrication de produit automatisée industrielle.

11. Système selon l'une quelconque des revendications 1 à 10, dans lequel ledit terminal comprend une interface utilisateur graphique et dans lequel au moins une desdites fonctions élémentaires est une fonction d'affichage élémentaire configurable par métadonnées pour afficher des données associées audit processus sur ledit terminal.

12. Système selon l'une quelconque des revendications 1 à 10, dans lequel ledit terminal comprend une interface de dispositif de commande de données connectée à un dispositif de commande de processus dans une installation de fabrication automatisée et dans lequel au moins une desdites fonctions élémentaires est un processus de fabrication piloté par métadonnées.

13. Procédé mis en oeuvre par ordinateur pour l'utilisation dans un système selon l'une quelconque des revendications 1 à 12, ledit procédé comprenant :
la récupération (304) de métadonnées de processus associées à un processus demandé (302) pour identifier (306) des fonctions élémentaires (118₁-118₉ ; 216₁-216₄) associées à un processus et au moins une séquence d'exécution desdites fonctions élémentaires ;
la récupération de premières métadonnées de configuration (214) pour configurer une première fonction élémentaire associée audit processus ;
la configuration (308) de ladite première fonction élémentaire sur la base desdites premières métadonnées de configuration ;
la génération (310) de premières données de sortie en exécutant ladite première fonction élémentaire configurée sur la base des données d'entrée ;
la détermination (312) d'une deuxième fonction élémentaire dans le processus sur la base des métadonnées de processus ;
**caractérisé par**
la récupération (314) de deuxièmes métadonnées de configuration pour configurer la deuxième fonction élémentaire sur la base au moins en partie desdites données de sortie ; et
l'exécution (316) de ladite deuxième fonction élémentaire configurée sur la base desdites deuxièmes métadonnées de configuration.

14. Produit de programme informatique, le produit de programme informatique comprenant des portions de code logiciel configurées, quand elles sont exécutées sur un ordinateur, pour exécuter un procédé selon la revendication 13.
